# EUROPÄISCHE PATENTSCHRIFT

(11) **EP 1 659 324 B1**
(45) Veröffentlichungstag und Bekanntmachung des Hinweises auf die Patenterteilung: **19.03.2008**
(21) Anmeldenummer: 05024061.3
(22) Anmeldetag: 04.11.2005
(51) Int. Cl.: F16K 47/02, F16K 11/078

(54) **Mischventil für Sanitärarmaturen**
Mixing valve for sanitary fitting
Mitigeur pour robinetterie sanitaire

(30) Priorität: 23.11.2004 DE 102004056568
(43) Veröffentlichungstag der Anmeldung: 24.05.2006
(73) Patentinhaber: Grohe AG, 58675 Hemer (DE)
(72) Erfinder: Pawelzik, Manfred, 59494 Soest (DE); Gebhardt, Wolfgang, 58706 Menden (DE); Steinhoff, Stefan, 59846 Sundern (DE)

(56) Entgegenhaltungen:
- EP-A- 0 311 573
- CH-A5- 630 711
- DE-A1- 3 134 280
- DE-A1- 3 202 113
- DE-U1- 8 800 295
- US-A- 4 301 836

## Beschreibung

Die Erfindung betrifft ein geräuscharmes Mischventil für Sanitärarmaturen gemäß dem Oberbegriff des Patentanspruchs 1.

Ein Mischventil ist beispielsweise aus der deutschen Offenlegungsschrift DE 33 18 888 A1 bekannt. Bei dieser Ausbildung ist im Bereich der Wandung des Überströmkanals in der Steuerscheibe als Körper zur Fließgeräuschminderung ein Mantel aus Siebgeflecht vorgesehen, wobei der der Ventilsitzscheibe zugekehrte Bereich des Mantels mit einem schräg in den Überströmkanal vorstehenden Rand versehen ist. Der in den Überströmkanal vorstehende Rand hat eine relativ gute Fließgeräusch mindernde Wirkung. Dabei wirkt der vorstehende Rand aber auch als eine nicht unerhebliche Durchflussdrossel, was unerwünscht ist. Darüber hinaus ist ein derartiger Siebkörper relativ teuer in der Herstellung und problematisch beim Einsatz in einem automatischen Montageprozess zur Erstellung der Mischventile.

Die EP 0 311 573 A1 offenbart ebenfalls ein Mischventil mit einem Geräusch mindernden Einsatz, der im Überströmkanal einer Steuereinheit bestehend aus einer Ventilsitzscheibe und einer beweglichen Steuerscheibe angeordnet ist. In dem Einsatz sind abwechselnd Stifte und durchgängige Löcher angeordnet, die sich bis auf eine Durchlassöffnung über den gesamten Querschnitt erstrecken. Somit dient auch dieser Einsatz als Siebkörper. Nachteilig daran ist jedoch, dass er aufgrund der Vielzahl von Stiften als Drosselelement wirkt, das den Durchfluss beschränkt.

Die DE 88 00 295 U1 offenbart ein gattungsgemäßes Mischventil mit einem Geräusch mindernden Einsatz. Das ringförmige Element ist entlang der Umfangslinie mit Zähnen versehen, die radial nach innen in den Einsatz hineinragen und dabei einen Raum mit einer gewissen Breite bilden. Auch an dieser Ausgestaltung der Zähne ist nachteilig, dass diese aufgrund ihrer Breite eine relativ große Anströmfläche bilden, die wie eine Drossel auf den Wasserstrom wirkt und den Zufluss verringert.

Der Erfindung liegt die Aufgabe zugrunde, das im Oberbegriff des Anspruchs 1 angegebene Mischventil weiter zu verbessern und insbesondere so auszubilden, dass der Körper zur Fließgeräuschminderung kostengünstig herstellbar ist und die maximale Durchflussmenge pro Zeiteinheit von dem Körper möglichst nicht beeinträchtigt wird.

Diese Aufgabe wird durch ein Mischventil mit den Merkmalen des Patentanspruchs 1 gelöst.

Weitere Ausgestaltungen der Erfindung sind in den Ansprüchen 2 bis 19 angegeben.

Die mit der Erfindung erzielbaren Vorteile bestehen insbesondere darin, dass der vorgeschlagene Körper zur Fließgeräuschminderung einfach und kostengünstig hergestellt werden kann. Durch die flache Ausbildung der Einrichtung zur Fließgeräuschminderung tritt auch bei der maximalen Durchflussmenge pro Zeiteinheit nahezu keine Drosselung auf. Darüber hinaus ist das aus massivem Flachmaterial hergestellte Ringelement problemlos in einen automatisierten Montageprozess zu integrieren.

In weiterer Ausgestaltung der Erfindung kann vorteilhaft der Abstand zwischen den Stiften etwa das 0,5-fache bis 1,5-fache der Breite der Stifte betragen. Hierbei kann zweckmäßig die Länge der Stifte so bemessen werden, dass sie etwa dem 5-fachen bis 9-fachen ihrer Breite entsprechen. Dabei können die Stifte sowohl eine quadratische oder rechteckige oder kreisförmige oder ovale Querschnittsfläche aufweisen.'
In einer bevorzugten Ausführung der Erfindung ist die Querschnittsfläche der Stifte an der der Wandung des Überströmkanals zugekehrten Seite halbkreisförmig und an der gegenüberliegenden Seite rechteckig ausgebildet. Hierbei können die der Ventilsitzscheibe zugekehrten Stirnseiten der Stifte eben oder kugelförmig verrundet ausgebildet sein. Dabei können die einzelnen Stifte über ihre gesamte Länge eine etwa gleich bleibende Querschnittsfläche aufweisen oder aber ausgehend von der der Ventilsitzscheibe zugekehrten Stirnseite über die Länge der Stifte stetig im Querschnitt zunehmend ausgebildet werden. Auch können die Stifte so dimensioniert werden, dass sie von der der Ventilsitzscheibe zugekehrten Stirnseite ausgehend lediglich in der Breite stetig bis zum Anschluss an das Ringelement zunehmen.
Die Reihe der Stifte zur Fließgeräuschminderung wird bevorzugt im Bereich der Wassereinlassöffnungen für Kaltwasser und Heißwasser angeordnet. Die Reihe der Stifte kann aber auch umlaufend an dem Ringelement ausgebildet sein. Dabei können die in der Ventilsitzscheibe ausgebildeten Einlassöffnungen für Kalt- und Heißwasser als Kreisringausschnitte ausgebildet werden, deren Breite etwa der 5-fachen bis 9-fachen Dicke der Stifte zur Fließgeräuschreduzierung entspricht.
Nach einer weiteren Ausbildung der Erfindung kann an dem Endbereich der die Fließgeräuschminderung bewirkenden Stifte an der von der Wandung des Überströmkanals abgekehrten Seite ein Quersteg mit beispielsweise kreisförmigen Querschnitt angeformt sein.
Zur genauen Positionierung der fließgeräuschmindernden Stifte können an dem Ringelement radial vorstehende Lappen oder auch ein im wesentlichen umlaufender Kragen angeformt sein. Der Kragen oder die Lappen des Ringelements fassen dabei in der Stecklage in einen Aufnahmespalt zwischen der Abdeck- und Führungsscheibe und der Steuerscheibe. Zweckmäßig werden hierbei das Ringelement, die Lappen oder der umlaufende Kragen und die fließgeräuschmindernden Stifte einstückig aus Kunststoff hergestellt.

Ausführungsbeispiele der Erfindung sind in der Zeichnung dargestellt und werden im Folgenden näher beschrieben. Es zeigt in der Zeichnung
- Figur 1: eine Mischventilkartusche, wie sie in Sanitärarmaturenkörper einsetzbar ist, in der Schnittebene I der Figur 2;
- Figur 2: die in Figur 1 gezeigte Mischventilkartusche in der Schnittebene II;
- Figur 3: die in Figur 1 dargestellte Ventilsitzscheibe in Ansicht von oben;
- Figur 4: die in Figur 1 gezeigte Steuerscheibe in Ansicht von oben;
- Figur 5: das in Figur 1 gezeigte Ringelement mit den Stiften in Perspektivansicht in vergrößerter Darstellung;
- Figur 6: das in Figur 5 gezeigte Ringelement in Seitenansicht;
- Figur 7: das in Figur 6 gezeigte Ringelement in Ansicht von unten;
- Figur 8: ein anderes Ausführungsbeispiel eines Ringelements in Perspektivansicht;
- Figur 9: das in Figur 8 gezeigte Ringelement in Ansicht von unten;
- Figur 10: ein weiteres Ausführungsbeispiel eines Ringelements, bei dem die Stifte nur an einem Teilbereich ausgebildet sind, in Perspektivansicht;
- Figur 11: ein weiteres Ausführungsbeispiel eines Ringelements in Perspektivansicht, bei dem die Stifte konisch geformt und nur an einem Teilbereich des Ringelements ausgebildet sind;
- Figur 12: das in Figur 11 gezeigte Ringelement in Ansicht von unten;
- Figur 13: eine Abwandlung des in Figur 5 bis 7 gezeigten Ringelements mit einem zusätzlichen Quersteg in Ansicht von unten.

Der Einfachheit halber sind bei den Ausführungsbeispielen in der Zeichnung gleiche oder entsprechende Elemente mit jeweils gleichen Bezugszeichen versehen.

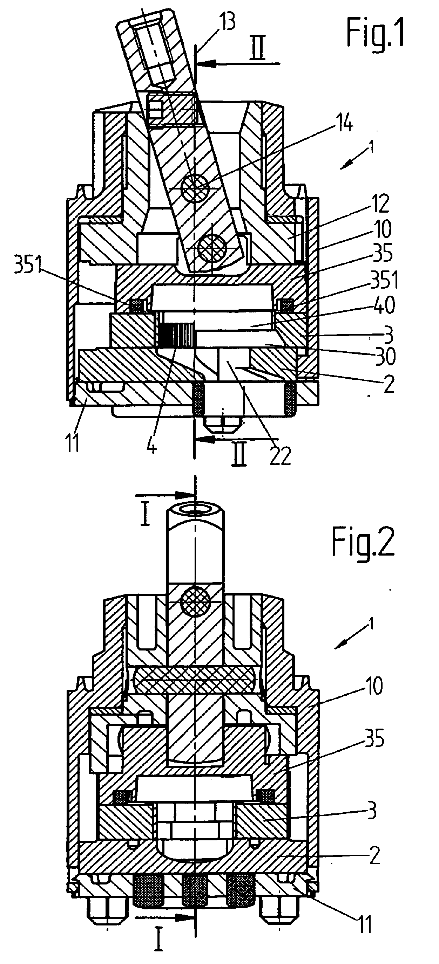

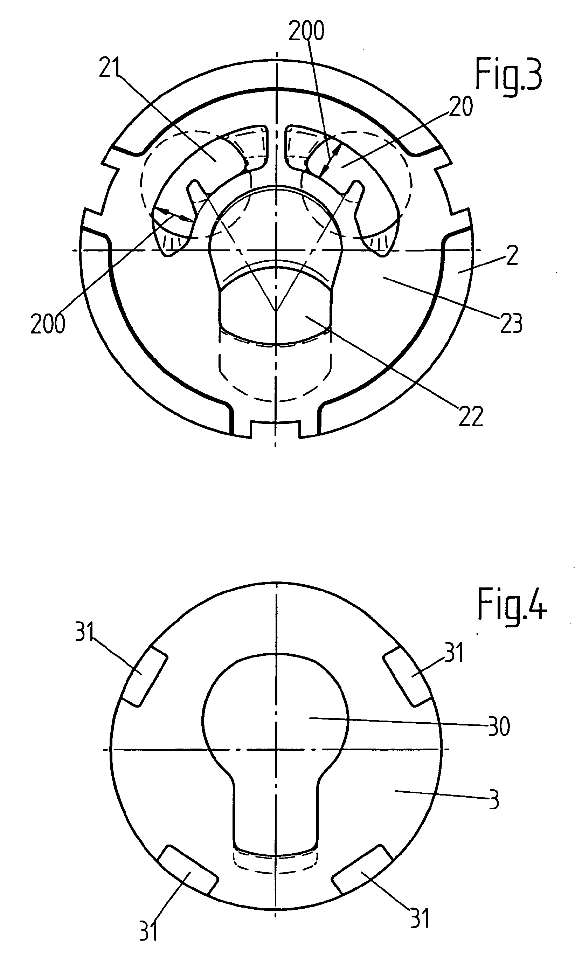

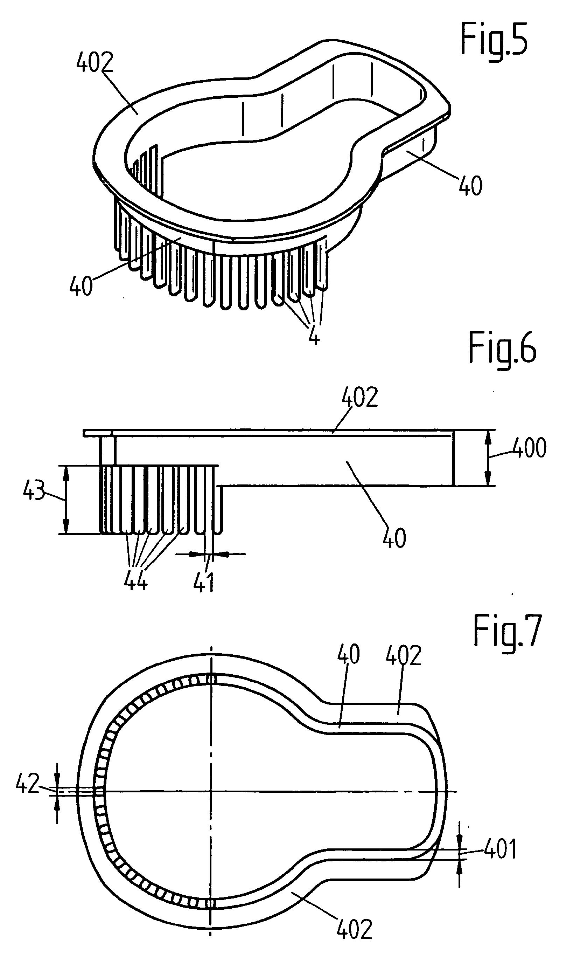

In Figur 1 und 2 der Zeichnung ist eine Mischventilkartusche 1 dargestellt, die als Baueinheit in einen in der Zeichnung nicht dargestellten Sanitärarmaturenkörper einsetzbar ist und in der Stecklage mit einer oder mehreren Schrauben am Armaturenkörper befestigbar ist.
Das Mischventil ist dabei in einem gestuften zylindrischen Kartuschengehäuse 10 angeordnet, welches an der Stirnseite mit dem größeren Durchmesser von einem Boden 11 verschlossen ist. In dem Boden 11 sind Öffnungen für den Kaltwasserzufluss, den Heißwasserzufluss und eine weitere Öffnung für das aus dem Mischventil austretende Wasser vorgesehen. Die Öffnungen im Boden 11 werden in der Stecklage gedichtet mit entsprechenden Wasserführungskanälen in dem in der Zeichnung nicht dargestellten Sanitärarmaturenkörper verbunden.
An der inneren Stirnseite des Bodens 11 ist eine Ventilsitzscheibe 2 aus Hartstoff, vorzugsweise Keramikmaterial, angeordnet und ortsfest von dem Kartuschengehäuse 10 gehalten. Wie es insbesondere aus Figur 3 der Zeichnung zu entnehmen ist, weist die Ventilsitzscheibe 2 eine ringausschnittförmige Wassereinlassöffnung 21 für Kaltwasser und eine ringausschnittförmige wassereinlassöffnung 20 für Heißwasser auf. Im Zentrum der Ventilsitzscheibe 2 ist außerdem eine Wasserauslassöffnung 22 ausgebildet. Die Wassereinlassöffnungen 20, 21 und die Wasserauslassöffnung 22 sind mit den entsprechenden Öffnungen im Boden 11 gedichtet verbunden. An der vom Boden 11 abgekehrten Stirnseite der Ventilsitzscheibe 2 ist eine feinst bearbeitete Gleitfläche 23 ausgebildet, an der eine Steuerscheibe 3 aus Hartstoff, vorzugsweise ebenfalls aus Keramikwerkstoff, angelagert ist. Die der Ventilsitzscheibe 2 zugekehrte Stirnseite der Steuerscheibe 3 ist ebenfalls feinst bearbeitet, der Art, dass die beiden Scheiben verschiebbar aber wasserdicht aneinander liegen. In der Steuerscheibe 3 ist ein Überströmkanal 30 als Durchbruch ausgebildet, wie es insbesondere aus Figur 4 der Zeichnung zu entnehmen ist.
An der von der Ventilsitzscheibe 2 abgekehrten Stirnseite der Steuerscheibe 3 ist eine Abdeck- und Führungsscheibe 35 gedichtet angelagert und mit Hilfe von Zapfen (in der Zeichnung nicht dargestellt), die in Ausnehmungen 31 der Steuerscheibe 4 einfassen, formschlüssig verbunden.
Die Abdeck- und Führungsscheibe 35 liegt an der gegenüberliegenden Seite an einer drehbar, aber axial festliegend im Kartuschengehäuse 10 angeordneten Buchse 12 an. In der Buchse 12 ist senkrecht zur Drehachse 13 eine Schwenkachse 14 vorgesehen, auf der ein Stellhebel 15 verschwenkbar angeordnet ist. Der innere Hebelarm des Stellhebels 15 ist an der Abdeck- und Führungsscheibe 35 angelenkt, während der äußere Hebelarm für die Aufnahme eines in der Zeichnung nicht dargestellten Handgriffs aus dem Kartuschengehäuse 10 herausgeführt ist. Durch eine Schwenkbewegung um die Schwenkachse 14 wird somit die Abdeck- und Führungsscheibe 35 zusammen mit der Steuerscheibe 3 radial bewegt, wodurch die Gesamtdurchflussmenge durch das Ventil eingestellt werden kann. Mit einer Drehbewegung um die Drehachse 13 kann dagegen das Mischungsverhältnis des zufließenden Kalt- und Heißwassers bzw. die Temperatur des Mischwassers eingestellt werden.
Zur Fließgeräuschminderung ist in dem Überströmkanal 30 der Steuerscheibe 3 ein Ringelement 40 angeordnet, wie es insbesondere aus Figur 5 bis 7 der Zeichnung zu entnehmen ist. Das Ringelement 40 entspricht mit seiner Außenwandung den Abmessungen des Überströmkanals 30. An dem den Wassereinlassöffnungen 20/21 in der Ventilsitzscheibe 2 zugeordneten Bereich sind an dem Ringelement 40 kammartig eine Reihe von Stiften 4 angeformt, dessen Dicke der Dicke 401 des Ringelements 40 entspricht. Die Reihe der Stifte erstreckt sich über einen Bogen von etwa 180°, wie es aus Figur 7 der Zeichnung zu entnehmen ist. Die Stifte 4 haben dabei einen Abstand 41 voneinander, der etwa der Breite 42 eines Stiftes 4 entspricht. Die Stifte 4 haben eine Länge 43, die etwa dem 5-fachen bis 9-fachen ihrer Breite 42 entspricht. Im Bereich der Reihe der Stifte 4 ist die Breite 400 des Ringelements 40 etwa um die Hälfte verringert. Die Stifte 4 reichen mit ihrer Stirnseite 44 in der Stecklage nahezu an die Gleitfläche 23 der Ventilsitzscheibe 2 heran. Die Stirnseite 44 ist dabei kugelförmig verrundet ausgebildet. Außerdem weist die der Wandung des Überströmkanals 30 zugekehrte Seite der Stifte 4 eine halbkreisförmige Querschnittsfläche auf, an der sich eine etwas rechteckige Querschnittsfläche anschließt, wobei die Rechteckflächen etwa radial zu einem Krümmungsmittelpunkt des Ringelements 40 gerichtet sind.
Zur Fixierung des Ringelements 40 im Überströmkanal 30 ist an dem vorstehenden Bereich des Ringelements 40 ein sich radial nach außen erstreckender Kragen 402 angeformt, der in der Stecklage von einem Spalt 351 zwischen der Abdeck- und Führungsscheibe 35 und der Steuerscheibe 3 aufgenommen ist, wie es aus Figur 1 der Zeichnung zu entnehmen ist. Das Ringelement 40 mit den Stiften 4 wird somit axial in der Steckposition gesichert.
Das Ringelement 40 mit dem Kragen 402 und den Stiften 4 ist einstückig im Spritzgießverfahren aus Kunststoff hergestellt.
Es wurde festgestellt, dass beim Wasserzapfvorgang die stärksten Fließgeräusche dann auftreten, wenn die Steuerscheibe 3 von der Absperrposition mit dem Überströmkanal 30 in die Überdeckung mit den Wasserzulauföffnungen 20/21 bewegt wird. Die Stifte 4 bewirken nun im Wesentlichen in diesem ersten Öffnungsbereich die Fließgeräuschminderung, wodurch in überraschender Weise insgesamt der Geräuschpegel erheblich herabgesenkt werden kann. Die bisher auftretende Drosselfunktion durch den Körper zur Fließgeräuschminderung kann mit den relativ fein ausgebildeten Stiften im Wesentlichen vermieden werden.

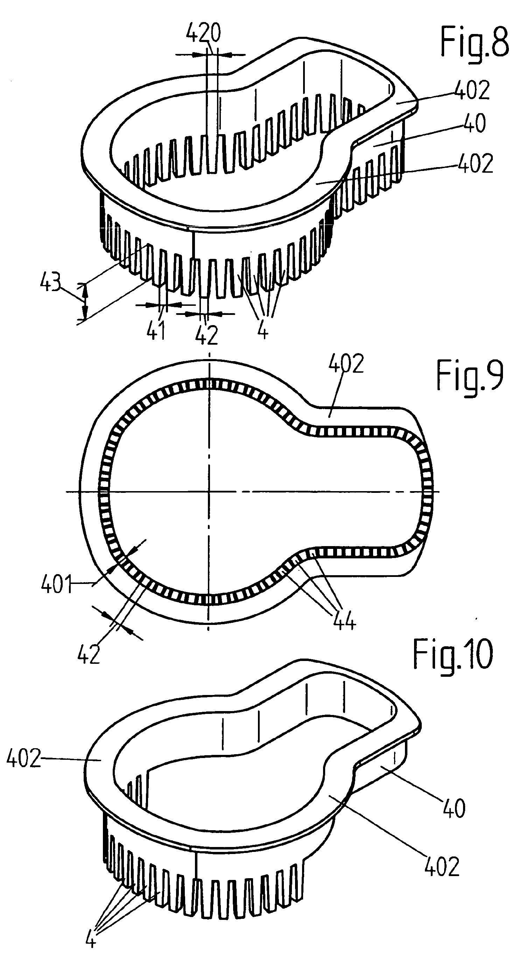

In Figur 8 und 9 der Zeichnung ist ein abgewandeltes Ausführungsbeispiel des Körpers zur Fließgeräuschminderung dargestellt. Das Ringelement 40 hat die gleichen Außenabmessungen, so dass es ebenfalls in den Überströmkanal 30, wie er insbesondere aus Figur 4 der Zeichnung zu entnehmen ist, einsetzbar ist. An dem Ringelement 40 sind die Stifte 4 in einer umlaufenden Reihe angeordnet. Die Stifte 4 weisen dabei eine der Ventilsitzscheibe 2 zugekehrte rechteckige Stirnseite auf, deren Breite 42 etwa 0,4mm und deren Dicke 401 etwa 0,5mm beträgt. Die einzelnen Stifte 4 sind dabei in Längsrichtung trapezförmig ausgebildet und weisen an der an dem Ringelement 40 anschließenden Stirnseite eine Breite 420 von etwa 0,55mm bis 0,6mm auf. Der Abstand 41 der Stifte 4 beträgt an der der Ventilsitzscheibe 2 zugekehrten Stirnseite etwa 0,4mm und entspricht somit der Breite 42 der Stifte 4. Die Länge 43 der Stifte 4 entspricht etwa der Breite 400 des Ringelements 40. Im übrigen entspricht der Körper zur Fließgeräuschminderung den in Figur 5 bis 7 der Zeichnung dargestellten Ausführungsbeispielen.

Das in Figur 10 der Zeichnung dargestellte Ausführungsbeispiel des Körpers unterscheidet sich lediglich zu dem in Figur 8 und 9 der Zeichnung dargestellten Körper zur Fließgeräuschminderung dadurch, dass die Stifte 4 nicht umlaufend sondern lediglich im stromaufwärts gelegenen, den beiden Wassereinlassöffnungen 20, 21 zugeordneten Bereich ausgebildet sind.

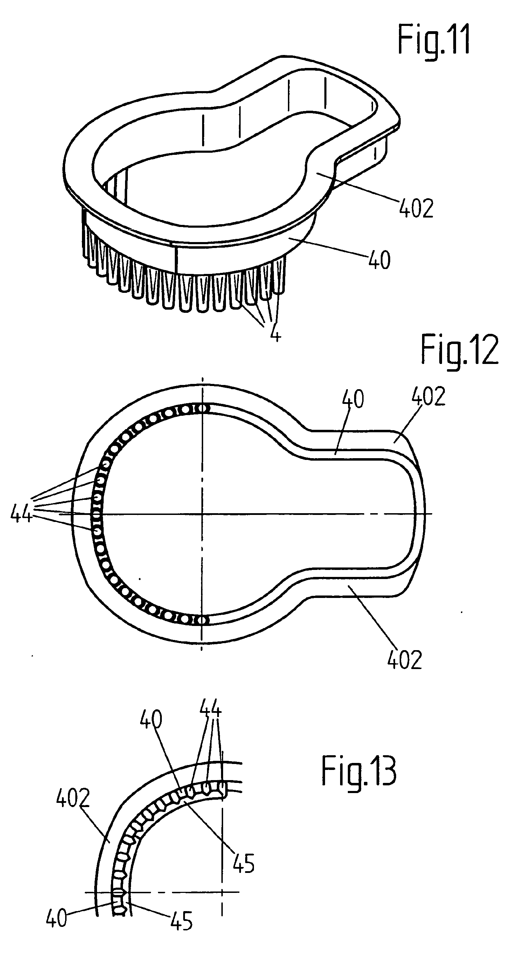

Bei dem Ausführungsbeispiel nach Figur 11 und 12 der Zeichnung ist der in Figur 10 dargestellte Körper zur Fließgeräuschreduzierung dahingehend abgewandelt, dass die Stifte 4 an einander zugekehrten Stirnseiten kreisförmig verrundet ausgebildet sind, wobei die der Ventilsitzscheibe 2 zugekehrte Stirnseite 44 eine Kreisfläche bildet.

In Figur 13 der Zeichnung ist schließlich ein Teil eines weiter abgewandelten Körpers zur Fließgeräuschminderung in Ansicht von unten dargestellt. Die Stäbe 4 weisen hierbei die äußere Form des in Figur 5 bis 7 dargestellten Ausführungsbeispiels auf. Zusätzlich ist hierbei an der von der Wandung des Überströmkanals 30 abgekehrten Seitenwand der Stäbe 4 im Bereich der verrundeten Stirnseite 44 ein umlaufender Quersteg 45 an den Stiften 4 angeformt. Der Quersteg 45 ist im Querschnitt etwa kreisförmig ausgebildet und weist einen Durchmesser von 0,3mm bis 0,5mm auf.

## Patentansprüche

1. Geräuscharmes Mischventil für Sanitärarmaturen
- mit einer wenigstens Einlassöffnungen für Kalt- und Heißwasser aufweisenden Ventilsitzscheibe (2)
und
- mit einer zur Ventilsitzscheibe (2) verschiebbar angeordneten Steuerscheibe (3),
- - die mit wenigstens einem als Durchbruch ausgebildeten Überströmkanal (30) versehen ist und
- - deren von der Ventilsitzscheibe (2) abgekehrte Stirnseite von einer Abdeck- und Führungsscheibe (35) gehalten ist,
wobei
- im Überströmkanal (30) im Bereich der Wandung ein Körper zur Fließgeräuschminderung angeordnet ist,
- als Körper ein Ringelement (40) aus massivem Flachmaterial vorgesehen ist,
- am Ringelement (40), wenigstens im Bereich der Wassereinlassöffnungen (20, 21) eine Reihe von mit Abstand (41) angeordneten Elementen (4) angeformt sind, die sich bis zum Bereich einer Gleitfläche (23) der Ventilsitzscheibe (2) erstrecken,
**dadurch gekennzeichnet, dass**
- die Elemente als Stifte (4) ausgebildet sind,
- dass die Stifte ausschließlich entlang der der Ventilsitzscheibe (2) zugekehrten Stirnseite des Ringelements (40) und lotrecht zur Gleitfläche (23) der Ventilsitzscheibe (2) angeordnet sind und
- dass die Dicke der Stifte (4) der Dicke des Ringelements (40) entspricht.

2. Mischventil nach Anspruch 1, **dadurch gekennzeichnet, dass** der Abstand (41) das 0,5-fache bis 1,5-fache der Breite (42) der Stifte (4) beträgt.

3. Mischventil nach Anspruch 1 oder 2, **dadurch gekennzeichnet, dass** die Stifte (4) eine Länge (43) aufweisen, die dem 5-fachen bis 9-fachen ihrer Breite (42) entspricht.

4. Mischventil nach wenigstens einem der vorhergehenden Ansprüche, **dadurch gekennzeichnet, dass** die Querschnittsfläche der Stifte (4) quadratisch oder rechteckig und/oder oval und/oder kreisförmig gestaltet ist.

5. Mischventil nach Anspruch 4, **dadurch gekennzeichnet, dass** die Querschnittsfläche an der der Wandung des Überströmkanals (30) zugekehrten Seite halbkreisförmig und an der abgekehrten Seite rechteckig ausgebildet ist.

6. Mischventil nach wenigstens einem der vorhergehenden Ansprüche, **dadurch gekennzeichnet, dass** die jeweils der Ventilsitzscheibe (2) zugekehrte Stirnseite (44) der Stifte (4) eben ausgebildet ist.

7. Mischventil nach wenigstens einem der vorhergehenden Ansprüche 1 bis 5, **dadurch gekennzeichnet, dass** die jeweils der Ventilsitzscheibe (2) zugekehrte Stirnseite (44) der Stifte (4) kugelförmig verrundet ausgebildet ist.

8. Mischventil nach wenigstens einem der vorhergehenden Ansprüche, **dadurch gekennzeichnet, dass** die Stifte (4) über ihre Länge eine gleich bleibende Querschnittsfläche aufweisen.

9. Mischventil nach wenigstens einem der vorhergehenden Ansprüche 1 bis 7, **dadurch gekennzeichnet, dass** die Breite (42) der Stifte (4), von der der Ventilsitzscheibe (2) zugekehrten Stirnseite (44) aus stetig zunimmt.

10. Mischventil nach Anspruch 9, **dadurch gekennzeichnet, dass** die Stifte (4) eine Breite (400) am Ringelement (40) aufweisen, die dem 1,2-fachen bis 1,6-fachen der Breite (42) des Stifts (4) am freien Ende beträgt.

11. Mischventil nach wenigstens einem der vorhergehenden Ansprüche, **dadurch gekennzeichnet, dass** die Reihe der Stifte (4) sich über den gesamten Umfang des Ringelements (40) erstreckt.

12. Mischventil nach wenigstens einem der vorhergehenden Ansprüche 1 bis 10, **dadurch gekennzeichnet, dass** die Reihe der Stifte (4) nur im Einströmbereich des Überströmkanals (30) angeordnet ist.

13. Mischventil nach wenigstens einem der vorhergehenden Ansprüche, **dadurch gekennzeichnet, dass** das Ringelement (40) eine Dicke (401) von 0,3mm bis 1,0mm hat.

14. Mischventil nach wenigstens einem der vorhergehenden Ansprüche, **dadurch gekennzeichnet, dass** in der Ventilsitzscheibe (2) Einlassöffnungen (20, 21) ausgebildet sind, deren Breite (200) der 5-fachen bis 9-fachen Dicke (401) der Stifte (4) entspricht.

15. Mischventil nach wenigstens einem der vorhergehenden Ansprüche, **dadurch gekennzeichnet, dass** am Endbereich der Stifte (4) an der von der Wandung des Überströmkanals (30) abgekehrten Seite ein Quersteg (45) angeformt ist.

16. Mischventil nach Anspruch 15, **dadurch gekennzeichnet, dass** der Quersteg (45) eine kreisförmige Querschnittsfläche aufweist.

17. Mischventil nach wenigstens einem der vorhergehenden Ansprüche, **dadurch gekennzeichnet, dass** an dem Ringelement (40) radial vorstehende Lappen angeformt sind, die in einem Spalt zwischen der Abdeck- und Führungsscheibe (35) in der Stecklage einfassen und das Ringelement (40) axial in der Stecklage sichern.

18. Mischventil nach Anspruch 17, **dadurch gekennzeichnet, dass** die einzelnen Lappen zu einem im Wesentlichen umlaufenden Kragen (402) zusammengefasst sind.

19. Mischventil nach wenigstens einem der vorhergehenden Ansprüche, **dadurch gekennzeichnet, dass** das Ringelement (40) mit den Lappen oder dem Kragen (402) und den Stiften (4) einstückig aus Kunststoff hergestellt ist.

## Claims

1. Low-noise mixing valve for sanitary fittings
- having a valve seat disc (2) which has at least inlet openings for cold and hot water
and
- having a control disc (3) arranged to move with respect to the valve seat disc (2),
- - that control disc (3) being provided with at least one flow-over channel (30) in the form of a through-gap
and
- - that end face of the control disc (3) which is remote from the valve seat disc (2) being held by a covering and guiding disc (35),
wherein
- in the flow-over channel (30), in the region of the wall, there is arranged, for reducing flow noise, a body,
- a ring element (40) of solidly formed flat material is provided as the body,
- formed on the ring element (40), at least in the region of the water inlet openings (20, 21), are a row of elements (4) arranged at a spacing (41) from one another and extending to the region of a slide surface (23) of the valve seat disc (2),
**characterised in that**
- the elements are in the form of pegs (4),
- **in that** the pegs are arranged exclusively along that end face of the ring element (40) which faces the valve seat disc (2) and perpendicular to the slide surface (23) of the valve seat disc (2), and
- **in that** the thickness of the pegs (4) corresponds to the thickness of the ring element (40).

2. Mixing valve according to claim 1, **characterised in that** the spacing (41) is 0.5 to 1.5 times the width (42) of the pegs (4).

3. Mixing valve according to claim 1 or 2, **characterised in that** the pegs (4) have a length (43) which corresponds to 5 to 9 times their width (42).

4. Mixing valve according to at least one of the preceding claims, **characterised in that** the cross-sectional area of the pegs (4) is square or rectangular and/or oval and/or circular.

5. Mixing valve according to claim 4, **characterised in that** the cross-sectional area is semi-circular on the side facing the wall of the flow-over channel (30) and rectangular on the remote side.

6. Mixing valve according to at least one of the preceding claims, **characterised in that** in each case that end face (44) of the pegs (4) which faces the valve seat disc (2) is flat.

7. Mixing valve according to at least one of the preceding claims 1 to 5, **characterised in that** in each case that end face (44) of the pegs (4) which faces the valve seat disc (2) is spherically rounded.

8. Mixing valve according to at least one of the preceding claims, **characterised in that** the pegs (4) have a cross-sectional area that remains the same over their length.

9. Mixing valve according to at least one of the preceding claims 1 to 7, **characterised in that** the width (42) of the pegs (4) increases continuously starting from that end face (44) which faces the valve seat disc (2).

10. Mixing valve according to claim 9, **characterised in that** the pegs (4) have a width (400) at the ring element (40) which is 1.2 to 1.6 times the width (42) of the peg (4) at the free end.

11. Mixing valve according to at least one of the preceding claims, **characterised in that** the row of pegs (4) extends over the entire periphery of the ring element (40).

12. Mixing valve according to at least one of the preceding claims 1 to 10, **characterised in that** the row of pegs (4) is arranged solely in the flow-in region of the flow-over channel (30).

13. Mixing valve according to at least one of the preceding claims, **characterised in that** the ring element (40) has a thickness (401) of 0.3 mm to 1.0 mm.

14. Mixing valve according to at least one of the preceding claims, **characterised in that** in the valve seat disc (2) there are formed inlet openings (20, 21) the width (200) of which corresponds to 5 to 9 times the thickness (401) of the pegs (4).

15. Mixing valve according to at least one of the preceding claims, **characterised in that** a transverse bridge (45) is formed on the end region of the pegs (4), on the side remote from the wall of the flow-over channel (30).

16. Mixing valve according to claim 15, **characterised in that** the transverse bridge (45) has a circular cross-sectional area.

17. Mixing valve according to at least one of the preceding claims, **characterised in that** there are formed onto the ring element (40) radially projecting tabs which in the inserted position engage in a gap between the covering and guiding disc (35) and secure the ring element (40) axially in the inserted position.

18. Mixing valve according to claim 17, **characterised in that** the individual tabs are combined to form a substantially circumferential collar (402).

19. Mixing valve according to at least one of the preceding claims, **characterised in that** the ring element (40), together with the tabs or the collar (402) and the pegs (4), is produced as one piece from plastics material.

## Revendications

1. Mitigeur silencieux de robinetterie sanitaire comprenant :
- au moins un disque formant siège de soupape (2) avec des orifices d'entrée pour l'eau froide et l'eau chaude et
* un disque de commande (3) coulissant par rapport à un disque formant siège de soupape (2),
* ce disque étant muni d'au moins un canal de passage (30) réalisé sous la forme d'un orifice traversant et
* la face frontale à l'opposé du disque formant siège de soupape (2) est tenue par une plaque de recouvrement et de guidage (35),
- le canal de passage (30) comportant dans la région de la paroi, un organe pour réduire le bruit d'écoulement,
- l'organe est un élément annulaire (40) en un matériau plat massif,
- l'élément annulaire (40) comporte au moins dans la région des orifices d'entrée d'eau (20, 21), une série d'éléments (4) avec des intervalles (41), et qui s'étendent jusque dans la région d'une surface de glissement (23) du disque formant siège de soupape (2),
**caractérisé en ce que**
- les éléments sont réalisés en forme de tiges (4),
- les tiges sont prévues exclusivement le long de la face frontale de l'élément annulaire (40) tournée vers le disque formant siège de soupape (2), perpendiculairement à la surface de glissement (23) du disque formant siège de soupape (2) et
- l'épaisseur des tiges (4) correspond à l'épaisseur de l'élément annulaire (40).

2. Mitigeur selon la revendication 1,
**caractérisé en ce que**
la distance (41) représente entre 0,5 et 1,5 fois la largeur (42) des tiges (4).

3. Mitigeur selon la revendication 1 ou 2,
**caractérisé en ce que**
les tiges (4) ont une longueur (43) correspondant à 5- 9 fois leur largeur (42).

4. Mitigeur selon au moins l'une des revendications précédentes,
**caractérisé en ce que**
la surface de la section des tiges (4) est carrée ou rectangulaire et/ou ovale et/ou circulaire.

5. Mitigeur selon la revendication 4,
**caractérisé en ce que**
la surface de la section du côté tourné vers la paroi du canal de passage (30) est semi-circulaire et du côté opposé elle est rectangulaire.

6. Mitigeur selon au moins l'une des revendications précédentes,
**caractérisé en ce que**
la face frontale (44) des tiges (4) tournée respectivement vers le disque formant siège de soupape (2) est plane.

7. Mitigeur selon au moins l'une des revendications précédentes 1 à 5,
**caractérisé en ce que**
la face frontale (44) des tiges (4) tournée vers le disque formant siège de soupape (2) est arrondie en forme de sphère.

8. Mitigeur selon au moins l'une des revendications précédentes,
**caractérisé en ce que**
les tiges (4) ont une section identique sur toute leur longueur.

9. Mitigeur selon au moins l'une des revendications précédentes 1 à 7,
**caractérisé en ce que**
la largeur (42) des tiges (4) augmente à partir de leur côté frontal (44) tourné vers le disque formant siège de soupape (2).

10. Mitigeur selon la revendication 9,
**caractérisé en ce que**
les tiges (4) ont une largeur (400) au niveau de l'élément annulaire (40) qui correspond à 1,2 jusqu'à 1,6 fois la largeur (42) de l'extrémité libre d'une tige (4).

11. Mitigeur selon au moins d'une des revendications précédentes,
**caractérisé en ce que**
la série des tiges (4) s'étend sur toute la périphérie de l'élément annulaire (40).

12. Mitigeur selon au moins l'une des revendications 1 à 10,
**caractérisé en ce que**
la série des tiges (4) n'est prévue que dans la zone d'entrée du canal de passage (30).

13. Mitigeur selon au moins l'une des revendications précédentes,
**caractérisé en ce que**
l'élément annulaire (40) a une épaisseur (401) comprise entre 0,3 mm et 1,0 mm.

14. Mitigeur selon au moins l'une des revendications précédentes,
**caractérisé en ce que**
le disque formant siège de soupape (2) comporte des orifices d'entrée (20, 21) dont la largeur (200) correspond à 5 jusqu'à 9 fois l'épaisseur (401) des tiges (4).

15. Mitigeur selon au moins l'une des revendications précédentes,
**caractérisé en ce que**
la zone d'extrémité des tiges (4) comporte une entretoise (45) au niveau du côté opposé à la paroi du canal de passage (3).

16. Mitigeur selon la revendication 15,
**caractérisé en ce que**
l'entretoise (45) a une section de forme circulaire.

17. Mitigeur selon au moins l'une des revendications précédentes,
**caractérisé en ce que**
l'élément annulaire (40) comporte des pattes radialement en saillie, qui viennent prendre dans une fente entre le disque de couverture et le disque de guidage (35) en position enfichée et elles bloquent axialement l'élément annulaire (40) en position enfichée.

18. Mitigeur selon la revendication 17,
**caractérisé en ce que**
les différentes pattes sont regroupées en une collerette (402) pratiquement périphérique.

19. Mitigeur selon au moins l'une des revendications précédentes,
**caractérisé en ce que**
l'élément annulaire (40) est réalisé en une seule pièce en matière plastique avec les pattes ou la collerette (402) et les tiges (4).
